# EUROPEAN PATENT APPLICATION

(11) **EP 4 361 798 A1**
(43) Date of publication of application: **01.05.2024**
(21) Application number: 21947524.1
(22) Date of filing: 30.06.2021
(51) Int. Cl.: G06F 8/65

(54) **METHOD FOR UPDATING ELECTRONIC CONTROL UNIT (ECU), ECU, AND TERMINAL**

(71) Applicant: Huawei Technologies Co., Ltd., Shenzhen, Guangdong 518129 (CN)
(72) Inventor: ZHANG, Tao, Shenzhen, Guangdong 518129 (CN)
(74) Representative: Huawei European IPR
(86) International application number: PCT/CN2021/103466
(87) International publication number: WO 2023/272570

(57) **Abstract**

This application provides an electronic control unit ECU update method and an ECU. The method includes: A second ECU obtains a first file from a first ECU, where the first file is a file locally stored in the first ECU; and the second ECU performs updating based on the first file, where the first ECU and the second ECU are located in a same terminal. The first file (target program) locally stored in the first ECU is transmitted to the second ECU through communication between ECUs in the terminal, so that the second ECU can be updated. This improves ECU update flexibility and update efficiency.

## Description

### TECHNICAL FIELD

This application relates to the vehicle field, and specifically, to an ECU update method, an ECU, and a terminal.

### BACKGROUND

With social development, intelligent terminals such as intelligent transportation devices, smart home devices, and robots are gradually entering people's daily lives.

In an intelligent vehicle, an electronic control unit (electronic control unit, ECU) is used to execute a program to process data. The ECU may be understood as a microcomputer controller in the self-driving field, or may be referred to as a vehicle-specific single-chip microcomputer. Each ECU includes a processor and a memory. The processor is configured to execute a program stored in the memory, to implement a specific function. An application in the ECU can be updated through hardware replacement, local upgrade, and over the air (over the air, OTA) upgrade. In this way, the application can be upgraded or repaired.

### SUMMARY

This application provides an ECU update method, an ECU, and a terminal, to improve ECU update flexibility, improve ECU update efficiency, and reduce costs.

According to a first aspect, an ECU update method is provided. The method includes: A second ECU obtains a first file from a first ECU, where the first file is a file locally stored in the first ECU; and the second ECU performs updating based on the first file, where the first ECU and the second ECU are located in a same terminal.

The file described in this application may alternatively be referred to as a version file, a program, a program file, software, a software version, or the like, and represents a program or software that can be used or run on an ECU. For example, the first file may be an application APP file, and is a version file of an APP that is not updated by the first ECU. The first file may be understood as a target file or a target program, and the following second file may be understood as an original file or an original program.

By using communication between the first ECU and the second ECU in the terminal, the second ECU may be updated to the first file locally stored in the first ECU, and each ECU does not need to obtain the first file from an external network. This improves flexibility of updating a file in an ECU.

With reference to the first aspect, in some possible implementations, that a second ECU obtains a first file from a first ECU includes: The second ECU obtains the first file from the first ECU when an update requirement is met, where the update requirement includes that a version of the first file is higher than a version of a second file, and the second file is a file used when the second ECU is not updated. For example, the second file is a version file of an APP that can be updated by the second ECU.

By setting the update requirement, the first ECU sends the first file to the second ECU when the update requirement is met, so that file versions in the first ECU and the second ECU match and are compatible. This enhances compatibility between ECUs and enhances function coordination between ECUs.

A file of a newer version has better performance. Each ECU processes data by using the first file of the newer version, so that processing performance can be improved. In addition, each ECU processes data by using a file of a same version, and processing results are consistent.

With reference to the first aspect, in some possible implementations, the method further includes: The second ECU sends version information to the first ECU, where the version information indicates the version of the second file; and that a second ECU obtains a first file from a first ECU includes: receiving the first file, where the first file is sent by the first ECU when the first ECU determines, based on the version information, that the update requirement is met.

The first ECU may determine, based on the version information sent by the second ECU, whether the second file needs to be updated. The first ECU may determine whether to send the first file to the second ECU, and no additional device needs to be disposed for determining. Therefore, implementation is simple, and costs can be reduced. For example, the first ECU may periodically detect whether another ECU of the terminal can operate normally or detect whether a version of the another ECU is lower, so that the first ECU may determine, based on an actual situation, whether to send the first file to the another ECU.

With reference to the first aspect, in some possible implementations, that a second ECU obtains a first file from a first ECU includes: The second ECU obtains the first file from the first ECU when a second file is abnormal, where the second file is a file used when the second ECU is not updated.

When the second file in the second ECU is abnormal, the first ECU sends a target program to the second ECU, so that an abnormal file in the second ECU can be updated in time.

With reference to the first aspect, in some possible implementations, before the second ECU performs updating based on the first file, the method further includes: The second ECU detects whether the second file is normal. Optionally, before the second ECU performs updating based on the first file, the second ECU may further detect whether the first file is normal.

The second ECU detects whether the second file in the second ECU is normal, and a detection manner is simple.

For example, the second ECU may further detect whether an updated file is abnormal. Optionally, the second ECU may periodically detect whether the updated file is abnormal, so as to detect in time whether the second ECU can be normally updated and whether the second ECU can operate normally if the second ECU can be normally updated. This ensures normal operation of an ECU and improves reliability of the ECU.

In addition, the second ECU detects whether the updated file is abnormal, so that the file can be re-obtained when the updated file is abnormal, to ensure normal operation of the ECU and improve reliability of the ECU.

With reference to the first aspect, in some possible implementations, that the second ECU detects whether the first file is normal includes: The second ECU performs integrity check on the first file.

Whether the first file is normal may be detected through integrity check, which provides an effective method for determining whether a file is normal.

With reference to the first aspect, in some possible implementations, the first file is obtained by the first ECU from a telematics box TBOX of the terminal. In other words, the first file may be obtained by the first ECU from an external network (networking) periodically or aperiodically in an OTA manner.

For example, when programs in the first ECU and the second ECU of the terminal need to be upgraded, the terminal obtains the first file from the external network in the OTA manner, and further sends the first file to the first ECU by using the TBOX and/or a gateway of the terminal, so that the program in the first ECU can be updated. The first file is sent to the second ECU by using the first ECU, and the TBOX does not need to send a same file to each ECU. In other words, the TBOX does not need to repeatedly obtain and forward the first file, so that a transmission resource for updating the ECU can be reduced.

With reference to the first aspect, in some possible implementations, the method further includes: before a second ECU obtains a first file from a first ECU, determining whether the second ECU needs to obtain the first file.

The first ECU or the second ECU may determine whether the second ECU needs to obtain the first file.

With reference to the first aspect, in some possible implementations, the second ECU obtains first version information, where the first version information indicates the version of the first file; the second ECU compares the version of the first file with the version of the second file based on the first version information; and that a second ECU obtains a first file from a first ECU includes: The second ECU obtains the first file from the first ECU when the version of the second file is lower than the version of the first file.

With reference to the first aspect, in some possible implementations, the method further includes: Before a second ECU obtains a first file from a first ECU, the second ECU detects whether the second file is abnormal; and that a second ECU obtains a first file from a first ECU includes: The second ECU obtains the first file from the first ECU when the second file is abnormal.

The second ECU detects whether the second file is abnormal, and obtains the first file when the second file is abnormal, so that the second file can be updated in time.

According to a second aspect, an ECU update method is provided. The method includes: A first ECU reads a first file locally stored in the first ECU; and the first ECU sends the first file to a second ECU, so that the second ECU updates the second file to the first file, where the first ECU and the second ECU are located in a same terminal.

The first ECU sends, to the second ECU by using the first ECU, the first file stored in a storage area corresponding to the first ECU, to update the second file in the second ECU. The second ECU can update a file through communication with the first ECU in the terminal, and does not need to obtain the first file from outside the terminal. This improves ECU update flexibility. Compared with a method of updating each ECU in the terminal by using an over-the-air upgrade manner or a local upgrade manner, the ECU method provided in this application can improve efficiency and reduce costs.

With reference to the second aspect, in some possible implementations, that the first ECU sends the first file to a second ECU includes: The first ECU sends the first file to the second ECU when an update requirement is met, where the update requirement includes that a version of the first file is higher than a version of a second file, and the second file is a file used when the second ECU is not updated.

The update requirement is set, and the first ECU sends the first file to the second ECU when the update requirement is met, so that file versions in the first ECU and the second ECU match and are compatible. This avoids incoordination of functions and even occurring of a conflict.

A file of a newer version has better performance. Each ECU processes data by using the first file of the newer version, so that processing performance can be improved. In addition, each ECU processes data by using a file of a same version, and processing results are consistent.

With reference to the second aspect, in some possible implementations, the method further includes: The first ECU receives version information sent by the second ECU, where the version information indicates the version of the second file; and the first ECU determines, based on the version information, whether the update requirement is met.

Therefore, the first ECU may determine, based on the version information sent by the second ECU, whether the second file needs to be updated. The first ECU may determine whether to send the first file to the second ECU, and no additional device needs to be disposed for determining, so that implementation is simple.

With reference to the second aspect, in some possible implementations, the method further includes: The first ECU receives the first file sent by a telematics box T-BOX.

When programs in the first ECU and the second ECU of the terminal need to be upgraded, the first file is sent to the first ECU by using the TBOX, so that the program in the first ECU can be updated. The first file is sent to the second ECU by using the first ECU, and the TBOX does not need to send a same file to each ECU. In other words, the TBOX does not need to repeatedly obtain the first file, so that occupation of a transmission resource can be reduced.

With reference to the second aspect, in some possible implementations, the terminal includes a telematics box T-BOX, and the method further includes: The first ECU receives measurement information sent by the T-BOX; the first ECU sends first response information to the T-BOX, where in a plurality of pieces of response information received by the T-BOX, response time corresponding to the first response information is less than response time corresponding to a second response message, and the second response information is sent by the second ECU to the T-BOX after the second ECU receives the measurement information; and the T-BOX forwards the first file to the first ECU.

The T-BOX determines the first ECU with short response time from a plurality of ECUs, and forwards the first file to the first ECU, so that a transmission delay can be reduced, and transmission efficiency can be improved. The T-BOX may be configured to forward a first file sent by a server.

With reference to the second aspect, in some possible implementations, that the first ECU sends a target program to a second ECU includes: The first ECU sends the first file to the second ECU when the second file is abnormal, where the second file is the file used when the second ECU is not updated.

When the second file in the second ECU is abnormal, the first ECU sends the target program to the second ECU, so that an abnormal file in the second ECU can be updated in time.

With reference to the second aspect, in some possible implementations, the method further includes: The first ECU sends version query information to the second ECU; and that the first ECU sends a target program to a second ECU includes: If the first ECU does not receive the version information from the second ECU in preset duration after the version query information is sent, the first ECU determines that an original program is abnormal, where the version information indicates a version of the original program.

When the second ECU does not respond, in the preset duration, to the version query information sent by the first ECU, the second ECU may be determined to be abnormal, so as to update an abnormal program in the second ECU in time.

With reference to the second aspect, in some possible implementations, the method further includes: The first ECU detects whether the first file is normal; and that the first ECU sends the first file to a second ECU includes: The first ECU sends the first file to the second ECU when the first file is normal.

When the first file is normal, the first file is sent to the second ECU, so that the second ECU updates the second file to the first file. This increases a probability that an updated first file in the second ECU is normal, avoids abnormal file transmission, and reduces resource occupation.

With reference to the second aspect, in some possible implementations, that the first ECU detects whether the first file is normal includes: The first ECU performs integrity check on the first file.

Whether the first file is normal may be detected through integrity check, which provides an effective method for determining whether a file is normal.

With reference to the second aspect, in some possible implementations, the first file is an application APP file.

According to a third aspect, an ECU is provided, including functional modules configured to implement the ECU update method according to the first aspect or the second aspect.

According to a fourth aspect, an ECU is provided, including a communication interface and a processor. The communication interface is used by the ECU to exchange information with another apparatus, and when program instructions are executed by the processor, the ECU is enabled to perform the ECU update method according to the first aspect or the second aspect.

According to a fifth aspect, a computer program storage medium is provided. The computer program storage medium has program instructions, and when the program instructions are executed, the method according to the first aspect or the second aspect is performed.

According to a sixth aspect, a chip is provided. The chip system includes at least one processor, and when program instructions are executed by the at least one processor, the method according to the first aspect or the second aspect is performed.

Optionally, in an implementation, the chip may further include the memory, and the memory stores instructions. The processor is configured to execute the instructions stored in the memory, and when the instructions are executed, the processor is configured to perform the method in any one of the implementations of the first aspect or the second aspect.

The foregoing chip may be specifically a field-programmable gate array (field-programmable gate array, FPGA) or an application-specific integrated circuit (application-specific integrated circuit, ASIC).

According to a seventh aspect, a terminal is provided, including a first ECU and a second ECU. The second ECU is configured to perform the method according to the first aspect, and the first ECU is configured to perform the method according to the second aspect. For example, the terminal is a vehicle.

### BRIEF DESCRIPTION OF DRAWINGS

FIG. 1 is a functional block diagram of a vehicle to which an embodiment of this application is applicable;
FIG. 2 is a schematic diagram of a structure of a communication method;
FIG. 3 is a schematic flowchart of an ECU update method according to an embodiment of this application;
FIG. 4 is a schematic flowchart of another ECU update method according to an embodiment of this application;
FIG. 5 is a schematic flowchart of an ECU program upgrade method according to an embodiment of this application;
FIG. 6 is a schematic diagram of a structure of an ECU according to an embodiment of this application;
FIG. 7 is a schematic diagram of a structure of another ECU according to an embodiment of this application; and
FIG. 8 is a schematic diagram of a structure of still another ECU according to an embodiment of this application.

### DESCRIPTION OF EMBODIMENTS

The following describes technical solutions of this application with reference to accompanying drawings.

An ECU update method provided in embodiments of this application may be applied to an intelligent driving vehicle. The following describes the technical solution in embodiments of this application with reference to the accompanying drawings.

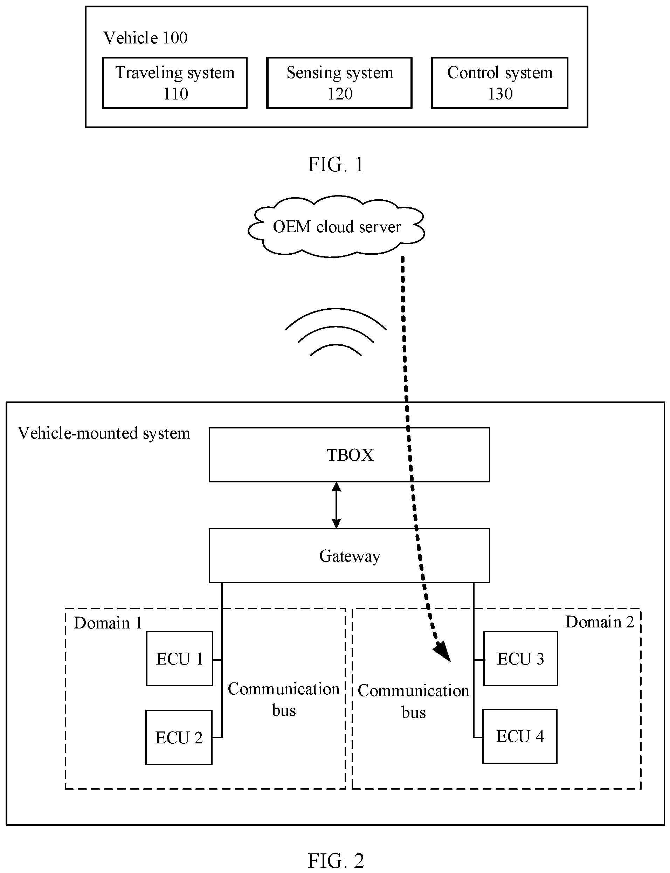

FIG. 1 is a functional block diagram of a vehicle to which an embodiment of this application is applicable. The vehicle 100 may be an intelligent driving vehicle, and the vehicle 100 may be configured to be in a fully or partially self-driving mode.

For example, the vehicle 100 can control the vehicle 100 when in the self-driving mode, and through manual operations, can determine current states of the vehicle and a surrounding environment of the vehicle, determine possible behavior of at least one another vehicle in the surrounding environment, determine a confidence level corresponding to a possibility that the another vehicle performs the possible behavior, and control the vehicle 100 based on determined information. When the vehicle 100 is in the self-driving mode, the vehicle 100 may be set to operate without interacting with a person.

The vehicle 100 may include various subsystems, for example, a traveling system 110, a sensing system 120, and a control system 130.

Optionally, the vehicle 100 may include more or less subsystems, and each subsystem may include a plurality of elements. In addition, each subsystem and component of the vehicle 100 may be interconnected in a wired or wireless manner.

The traveling system 110 may include components configured to provide power motion to the vehicle 100. The sensing system 120 may include several sensors that sense information about an ambient environment of the vehicle 100. The control system 130 controls operations of the vehicle 100 and components of the vehicle 100.

Optionally, the foregoing components are merely examples. During actual application, components in the foregoing modules may be added or removed based on an actual requirement. FIG. 1 should not be construed as a limitation on embodiments of this application.

Optionally, the vehicle 100 may be a self-driving vehicle traveling on a road and may identify an object in a surrounding environment of the vehicle, to determine to adjust a current speed. The object may be another vehicle, a traffic control device, or another type of object. In some examples, each recognized object may be considered independently and may be used to determine a speed to be adjusted by a self-driving vehicle, based on features of each object, such as a current speed of the object, acceleration of the object, or a spacing between the object and the vehicle.

Optionally, the vehicle 100 or a computing device associated with the vehicle 100 may predict behavior of the recognized object based on a feature of the recognized object and a state of a surrounding environment (for example, traffic, rain, ice on a road, and the like).

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

Based on functions of electronic components in a vehicle-mounted system of a vehicle, these electronic components may be divided into a plurality of domains such as a power domain, an intelligent driving domain, and an intelligent cockpit domain. Each domain may include at least one electronic control unit (electronic control unit, ECU).

Electronic components in the traveling system 110 belong to the power domain, and electronic components in the sensing system 120 and the control system 130 belong to the intelligent driving domain. Electronic components in the intelligent cockpit domain are used to support office, leisure, and entertainment activities in dynamic commuting scenarios.

ECUs in a same domain can communicate with each other through a communication bus.

The ECU includes a processor (for example, a microcontroller unit (microcontroller unit, MCU)), a memory, and an input/output interface (input/output, I/O). The ECU may further include one or more of an analog-to-digital converter (analog-to-digital converter, A/D), a shaping integrated circuit, a driving integrated circuit, and the like.

With the increase of a quantity of vehicle-mounted ECUs and the increasing complexity and intelligence of functions, an upgrade frequency of an application (application, APP) running on the vehicle-mounted ECUs is increasing. The application may have a disadvantage due to a situation such as an erasing operation of a storage area of the application triggered by an exception, or a fault occurring in an upgrade process, and the application needs to be repaired.

The application in the vehicle-mounted ECU can be upgraded or repaired through over the air (over the air, OTA) upgrade, local upgrade, or hardware replacement. The application in the ECU is an application stored in the memory.

By replacing the hardware, a component at which the ECU is located can be removed from an entire vehicle and a hardware module with a new application can be reinstalled. Costs are high because the hardware module needs to be replaced. To remove and install the hardware, a user needs to go to a professional vehicle maintenance shop or hire professional personnel to provide door-to-door services, which is time-consuming. An application stored in an ECU memory in a replaced hardware module may be incompatible with an application stored in another vehicle-mounted ECU memory in the vehicle. As a result, a vehicle-mounted system cannot run normally.

Through local upgrade, the vehicle-mounted system can be connected to a diagnostic instrument or a specific upgrade device of an original equipment manufacturer (original equipment manufacturer, OEM) through a communication cable, and a new application stored on the diagnostic instrument can be transmitted to a memory of an ECU to be upgraded or repaired. In this way, the application of the ECU can be upgraded or repaired. To implement local upgrade, the vehicle-mounted system needs to be connected to the diagnostic instrument or the specific upgrade device through the communication cable. In other words, the user needs to go to a professional vehicle maintenance shop or hire professional personnel to provide door-to-door services, which is time-consuming.

As shown in FIG. 2, through OTA, an application stored on an OEM cloud server may be transmitted to a specific ECU by using a wireless network by using a device such as a telematics box (telematics box, T-Box) or a gateway in the vehicle-mounted system, so as to implement application upgrade and repair of the ECU.

The gateway is a central node for communication in a vehicle, connects most electric control units in the vehicle, and supports various bus systems. The gateway can implement cross-domain function integration, basic routing communication and protocol translation, in-vehicle data extraction and integration, security deployment, and diagnosis communication and network connection services, making vehicle interconnection a reality.

The telematics box (telematics box, T-Box), also referred to as a vehicle-mounted information box, is mainly configured to provide interaction between the gateway and an internet. The T-box may belong to a communication domain.

The vehicle-mounted system may include a plurality of ECUs of a same type. Hardware compositions of the plurality of ECUs of the same type are the same, and applications stored in memories of all ECUs of the same type are the same.

Each ECU in the vehicle-mounted system uses OTA and local upgrade to upgrade and repair applications, resulting in high costs.

To resolve the foregoing problems, embodiments of this application provide an ECU update method and apparatus. An update software locally stored in a first ECU is forwarded to a second ECU, so that the second ECU performs updating. Therefore, when a second ECU with a lower software version exists in a plurality of ECUs in a terminal or update software of the second ECU is damaged, and the second ECU needs to be updated, the update software may be directly obtained from another ECU of the terminal, for example, a first ECU with a higher software version or a first ECU with an intact software version. It can be learned that according to the method in this application, when available update software exists in an ECU of the terminal, the update software may be directly forwarded to an ECU that needs to be updated, so that the update software does not need to be obtained in real time in an OTA manner. This greatly reduces a network resource, reduces update time, and improves update efficiency. In addition, update software locally stored in the first ECU may not only be used by the first ECU, but also be shared with another ECU in the terminal, to improve reuse efficiency of the update software.

The software may alternatively be referred to as a software version, a file, an installation file, an update file, a program, a program file, or the like, and represents a program or software that can be used for or run on the ECU.

The ECU described in this application is a controller of the terminal. A name of the controller is not limited in this application. A function of the ECU described in this application includes controlling a running status of the terminal and/or environmental data collection. For example, when the ECU is used for a vehicle, the ECU may control a traveling status of the vehicle.

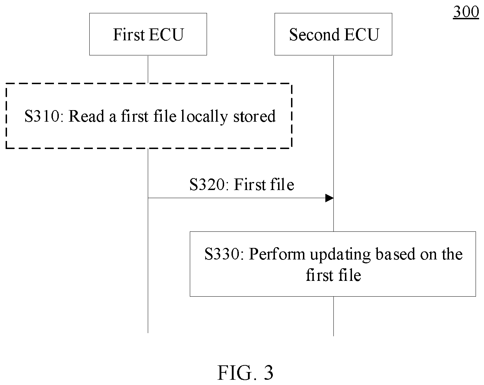

FIG. 3 is a schematic flowchart of an ECU update method according to an embodiment of this application.

A terminal includes a first ECU and a second ECU.

The terminal may be one or more of apparatuses such as a vehicle, a vehicle-mounted apparatus, and a vehicle-mounted chip.

The ECU update method 300 includes S320 to S330.

In S320, the second ECU obtains a first file from the first ECU.

The first file is a file locally stored in the first ECU. The first file is stored in a storage area corresponding to the first ECU.

The first file may be an application file. The application file may alternatively be referred to as a version file. The first ECU may execute the first file, to implement a function of an application.

In S330, the second ECU performs updating based on the first file.

The second file is a file locally stored in the second ECU.

In S320 to S330, through communication between the first ECU and the second ECU in the terminal, the second ECU may be updated to the first file locally stored in the first ECU, and each ECU does not need to obtain the first file from an external network. This improves flexibility of updating a file in an ECU.

The first file may be understood as a target program, and the second file may be understood as an original program.

In some embodiments, the second ECU may obtain the first file locally stored in the first ECU.

When the second file is abnormal, the second ECU may obtain the first file locally stored in the first ECU.

Optionally, the second ECU may perform integrity check on the second file. The integrity check may be performed based on cyclic redundancy check (cyclic redundancy check, CRC), cipher-based message authentication code (cipher-based message authentication code, CMAM), or the like. Whether the second file is abnormal may be determined through the integrity check.

Alternatively, when a version of the second file is lower than a version of the first file, the second ECU may obtain the first file locally stored in the first ECU.

Optionally, the second ECU may obtain first version information from the first ECU. The first version information indicates the version of the first file. The second ECU may compare the version of the first file with the version of the second file based on the first version information. When the version of the first file is determined to be higher than the version of the second file, the second ECU may obtain the first file locally stored in the first ECU. Alternatively, the second ECU may send second version information of the second file of the second ECU to the first ECU, and the first ECU performs determining based on the first version information of the first ECU and the second version information of the second ECU. When the first ECU determines that the version of the first file is higher than the version of the second file, the second ECU may obtain the first file locally stored in the first ECU.

Before S320, S310 may be performed. In S310, the first ECU reads the first file locally stored in the first ECU. In S320, the first ECU may send the first file to the second ECU.

Therefore, each ECU does not need to have a capability of reading local storage of another ECU, and the second ECU can update the second file by receiving the first file from the first ECU.

In S320, the first ECU may further send a file identifier to the second ECU. The second ECU may update the second file to the first file based on the file identifier. The first file and the second file may be files of a same type and have same identifiers.

When an update requirement is met, the second ECU may obtain the first file.

The update requirement may be that the version of the first file is higher than the version of the second file. Therefore, versions of files that are used to implement a same or similar function and that are in ECUs are consistent, and are all newest versions.

Usually, a file of a newer version has better performance. Each ECU processes data by using a file of a newest version, so that processing performance can be improved. In addition, each ECU processes data by using a file of a same version, and processing results are consistent.

Optionally, the second ECU may periodically or aperiodically send version information to the first ECU.

Alternatively, the first ECU may send version query information to the second ECU. The version query information is used to indicate the second ECU to send version information to the first ECU. After receiving the version query information, the second ECU may send the version information to the first ECU.

Alternatively, the first ECU may periodically or aperiodically send the version query information to the second ECU.

In some other embodiments, the terminal includes a processing system and a control apparatus. The processing system includes the first ECU and the second ECU. The control apparatus may be a device independent of each ECU in the processing system. Before S320 is performed, the first ECU may send the first version information to the control apparatus, and the second ECU may send the second version information to the control apparatus. The first version information indicates the version of the first file, and the second version file indicates the version of the second file. The control apparatus may control the processing system to perform S320 to S330.

The control apparatus may send the version query information to each ECU in the processing system. After receiving the version query information, each ECU may send, to the control apparatus, version information of the ECU which indicates a version of a file locally stored in the ECU. Alternatively, each ECU may periodically or aperiodically send the version information of the ECU to the control apparatus. The control apparatus may control, based on the received version information sent by each ECU, the processing system to perform S310 to S330. For example, in at least one case, the control apparatus may control the processing system to perform S310 to S330: If the version information of the second ECU is not received, the second file locally stored in the second ECU is determined to be abnormal, and the second file is determined to be updated.

The control apparatus is separately disposed, so that a quantity of devices of the terminal device increases, and a large amount of space is occupied.

Optionally, when the second file is abnormal, the first ECU sends the first file to the second ECU.

It can be learned that when the second file locally stored in the second ECU is abnormal, the first ECU sends the first file to the second ECU, so that an abnormal file in the second ECU can be updated in time.

In some embodiments, when the second ECU determines that the second file is abnormal, the second ECU may send exception indication information to the first ECU, where the exception indication information indicates that the second file is abnormal. The first ECU may determine, based on the received exception indication information, that the second file needs to be updated, and send the first file to the second ECU.

In some other embodiments, the first ECU may send the version query information to the second ECU. The version query information is used to indicate the second ECU to send the version information to the first ECU, and the version information sent by the second ECU indicates the version of the second file locally stored in the second ECU. When the second file is abnormal, the second ECU may not send the version information to the first ECU. If the first ECU does not receive, in preset duration after the version query information is sent, the version information sent by the second ECU, the first ECU determines that the second file is abnormal, and sends the first file to the second ECU.

Therefore, in a process of querying the version of the second file in the second ECU, the first ECU can determine whether the second file is abnormal, so as to update the abnormal second file in the second ECU in time.

The first ECU may receive the first file sent by a TBOX. The TBOX, the first ECU, and the second ECU are located in a same terminal. In other words, the first file may be obtained by the first ECU from the external network periodically or aperiodically in an OTA manner. In addition, the first ECU may not only perform updating by using the first file, but also forward the first file to another ECU that needs to be updated in the terminal. This improves update efficiency of the ECU in the terminal, and reduces a network transmission resource.

The TBOX can forward information and files sent by a server to each ECU. The server may be one or more of different types of servers such as a physical server and a virtual server, and may have a processing function and receiving and sending functions. The server may be, for example, an OEM cloud server.

When files in the first ECU and the second ECU of the terminal need to be upgraded, a new file is forwarded to the first ECU by using the TBOX, so that the file in the first ECU can be updated; and then the new file is sent to the second ECU by using the first ECU, so that a quantity of times that the server repeatedly sends the new file to the terminal is reduced, occupation of a transmission resource can be reduced, and file update efficiency can be improved.

The first ECU may be any ECU in a plurality of ECUs of a same type, and receives the first file sent by the server. The plurality of ECUs of a same type may store files used to implement a same function. For example, the first ECU may be an ECU that responds fastest to measurement information sent by the T-BOX.

The terminal includes the T-BOX. The T-BOX may send the measurement information to ECUs of a same type in the terminal.

After receiving the measurement information sent by the T-BOX, each ECU sends response information to the T-BOX. In a plurality of pieces of response information received by the T-BOX, the T-BOX may determine an ECU with shortest response time as the first ECU, and forward the first file sent by the server to the first ECU. For example, the first ECU may be a primary ECU.

In other words, the first ECU may receive the measurement information sent by the T-BOX. The first ECU may send first response information to the T-BOX. In the plurality of pieces of response information received by the T-BOX, response time corresponding to the first response information is less than response time corresponding to a second response message. The second response information is sent by the second ECU to the T-BOX after the second ECU receives the measurement information. Then, the first ECU receives the first file sent by the T-BOX.

When the T-BOX forwards the first file sent by the server, the T-BOX determines the first ECU with short response time from the plurality of ECUs, and the T-BOX forwards the first file sent by the server to the first ECU. This can reduce a transmission delay and improve transmission efficiency.

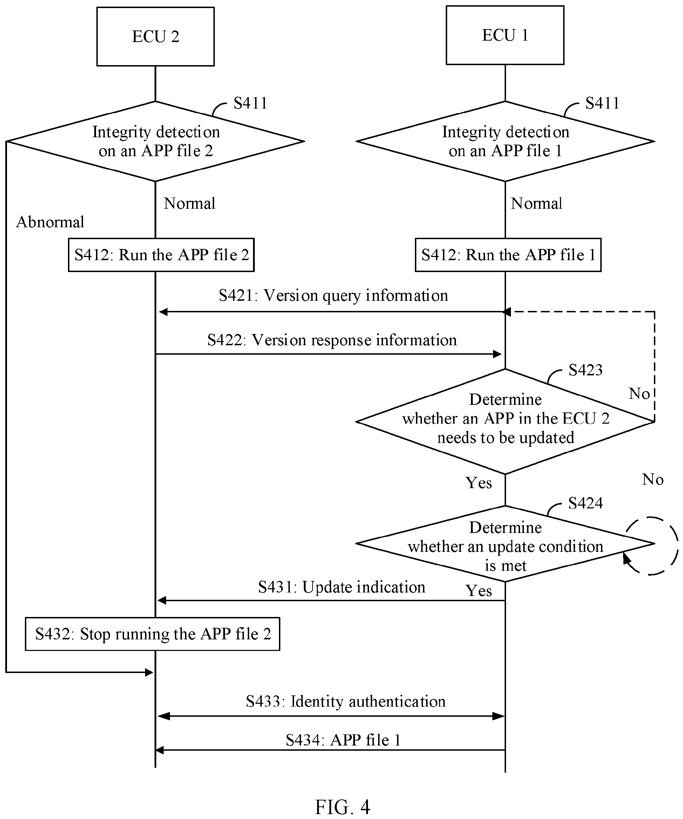

FIG. 4 is a schematic flowchart of an ECU update method according to an embodiment of this application.

An application APP of an ECU refers to an ECU program used to complete one or more specific tasks. The following uses an example in which the application APP in the ECU is updated for description.

A terminal includes a plurality of ECUs of a same type.

The plurality of ECUs of the same type include an ECU 1 and an ECU 2.

When each ECU is powered on, S411 may be performed.

In S411, an ECU performs integrity detection on an APP file stored in a storage area of the ECU. When each ECU is powered on, a boot loader (BootLoader) can be run. The BootLoader can be used to initialize the ECU and boot running of the APP file. An APP file stored in a storage area of each ECU may alternatively be understood as an APP file of the ECU, that is, an APP file currently used by the ECU.

When the BootLoader is run, the ECU may perform integrity detection on the APP file stored in the storage area corresponding to the ECU. The integrity detection may alternatively be referred to as integrity check.

Usually, the BootLoader is stored in a storage area with a protection function. After delivery, data stored in the storage area with the protection function does not change. Therefore, the BootLoader is not likely damaged and is not be upgraded after delivery.

When a detection result of S411 is abnormal, the APP file is no longer run, and the BootLoader is kept running.

When the detection result is normal, S412 is performed.

In S412, the ECU runs the APP file. To be specific, after the APP file passes the integrity detection and the ECU completes boot of the BootLoader, the ECU jumps to the APP file, that is, the ECU starts to execute the APP file to implement a service function of the APP file.

In S421, the ECU sends version query information to another ECU of the same type.

The version query information is used to request version information of an APP file in the another ECU of the same type.

An example in which the ECU 1 sends the version query information to the ECU 2 is used for description.

When the ECU 2 runs an APP file 2, if the version query information sent by the ECU 1 is received, S422 is performed.

In other words, when the ECU 2 runs the APP file 2, if the version query information sent by the ECU 1 is received, S422 is performed.

In S422, the ECU 2 sends version response information to the ECU 1.

The version response information sent by the ECU 2 indicates version information of the APP file 2 in the ECU 2.

If a detection result of the ECU 2 in S411 is abnormal, and the APP file 2 is not run, the ECU 2 may send exception information to the ECU 1 when receiving the version query information sent by the ECU 1. The exception information indicates that an exception occurs in integrity check of the APP file 2 in the ECU 2.

Alternatively, when a detection result of the ECU 2 in S411 is abnormal, and the APP file 2 is not run, the ECU 2 may not send the version response information to the ECU 1.

In S423, the ECU 1 determines whether the APP file 2 in the ECU 2 needs to be updated.

When at least one of the following cases occurs, the ECU 1 may determine that the APP file 2 in the ECU 2 needs to be updated: The ECU 1 receives the exception information sent by the ECU 2, the ECU 1 does not receive, after preset duration after S421, the version response information sent by the ECU 2, or the version response information sent by the ECU 2 meets an update condition.

For example, when the version response information sent by the ECU 2 is received, the ECU 1 may determine, based on the version information included in the version response information, whether the APP file 2 in the ECU 2 needs to be updated, that is, whether an update requirement is met. For example, the update requirement may be that a version of the APP file 2 indicated by the version information included in the version response information is lower than a version of the APP file 1 in the ECU 1. When the version information included in the version response information meets the update requirement, the ECU 1 determines that the APP file 2 in the ECU 2 needs to be updated.

When the ECU 1 determines that the APP file 2 in the ECU 2 does not need to be updated, the ECU 1 may periodically or aperiodically perform S421 again. In other words, the ECU 1 may periodically or aperiodically detect whether an APP file in another ECU of a same type needs to be updated.

When the ECU 1 determines that the APP file 2 in the ECU 2 needs to be updated, S424 is performed.

In S424, the ECU 1 determines whether the update condition is met.

When the update condition is met, the ECU 1 may determine to update the APP file 2 in the ECU 2.

The update condition may include at least one of a preset voltage range, a preset maximum terminal speed, and the like of the ECU 2. The ECU 1 or the ECU 2 may determine whether the ECU 2 meets the update condition. When the terminal is a vehicle, the preset maximum terminal speed may be a traveling speed of the vehicle.

Updating the APP file 2 in the ECU 2 when a voltage of the ECU 2 meets the preset voltage range can reduce a possibility that an error occurs when the ECU 2 stores the received APP file 2. Updating the APP file 2 in the ECU 2 when a terminal speed is less than the preset maximum terminal speed can reduce impact of updating the ECU 2 on driving safety of the vehicle. In some cases, the preset maximum vehicle speed may be 0, that is, ECU update is performed when the vehicle does not travel.

The ECU 1 may send an update condition check request to the ECU 2, to indicate the ECU 2 to obtain update detection information such as an operating voltage of the ECU 2 and a vehicle speed of a vehicle on which the ECU 2 is located. The ECU 2 may perform detection to obtain the update detection information, and send the update detection information to the ECU 1. The ECU 1 may determine, based on the update detection information, whether the update condition is met. Alternatively, the ECU 2 may determine, based on the update detection information, whether the update condition is met, and send a determining result of whether the update condition is met to the ECU 1.

Alternatively, the ECU 1 may perform detection to obtain the update detection information, and determine whether the update condition is met. Alternatively, some information in the update detection information may be detected by the ECU 1, and some other information may be detected by the ECU 2. For example, the ECU 1 may send the update condition check request to the ECU 2, to indicate the ECU 2 to detect an operating voltage of the ECU 2. The ECU 1 may detect a vehicle speed of a vehicle on which the ECU 1 is located. Then, the ECU 1 may determine, based on the vehicle speed obtained through detection and the operating voltage that is of the ECU 2 and that is sent by the ECU 2, whether the update condition is met.

If the update condition is not met, or the ECU 1 does not receive the update detection information sent by the ECU 2 or the determining result about whether the update condition is met, the ECU 1 determines that the update condition is not met. When the ECU 1 determines not to perform updating, the ECU 1 may continue to run the APP file 1. When ECU 1 determines that the update condition is not met, an update procedure ends. In some embodiments, when the ECU 1 determines that the update condition is not met, the ECU 1 may perform S424 again after preset duration.

If the ECU 1 receives the update detection information from the ECU 2 and determines that the update detection information meets the update condition, or the ECU 1 receives, from the ECU 2, the determining result indicating that the update condition is met, the ECU 1 determines to update the APP file 2 in the ECU 2. When determining that the update condition is met, the ECU 1 may perform S431.

In S431, the ECU 1 sends an update indication to the ECU 2.

When the ECU 1 determines that the update condition is met, the ECU 1 may stop running the APP file 1, and run the BootLoader.

If the detection result of the ECU 2 in S411 is abnormal, S433 is performed.

If the detection result of the ECU 2 in S411 is normal, that is, the ECU 2 is running the APP file 2, the ECU 2 performs S432 after receiving the update indication.

In S432, the ECU 2 stops running the APP file 2. ECU 2 can also run the BootLoader.

After S432, S433 may be performed.

In S433, the ECU 1 performs identity authentication with the ECU 2.

Specifically, the ECU 1 may send an identity authentication request to the ECU 2. The ECU 2 determines, based on the identity authentication request, whether an identity of the ECU 1 is valid, and sends, to the ECU 1, a result of determining whether the identity of the ECU 1 is valid.

If the identity authentication succeeds, S434 is performed.

In S434, the ECU 1 sends the APP file 1 to the ECU 2.

The ECU 1 reads the APP file 1 from a storage area of the ECU 1, and sends the read APP file 1 to the ECU 2.

The ECU 2 may write the APP file 1 sent by the ECU 1 into a storage area of the ECU 2, so as to update the ECU 2 based on the APP file 1.

After S434, the ECU 1 may continue to run the APP file 1, and the ECU 2 may read the APP file 1 in the storage area of the ECU 2 and run the APP file 1. For example, the ECU 1 and the ECU 2 may run the BootLoader, to boot running of the APP file 1.

Specifically, after completing sending of the APP file 1 in S434, the ECU 1 may send a reset request to the ECU 2. After receiving the reset request, the ECU 2 may run the BootLoader, and read the APP file 1 in the storage area and run the APP file 1.

In a process in which the ECU 2 runs the BootLoader, the ECU 2 may perform integrity detection on the APP file 1 in the storage area. Therefore, the ECU 2 may determine whether the updated APP file 1 is normal.

In other words, after S434, S411 to S434 may be performed again.

In S411 to S434, the ECU 2 may be updated when the APP file 2 of the ECU 2 is incomplete or with a lower version.

In some embodiments, when the detection result performed by the ECU 2 in S411 is abnormal, the ECU 2 may send exception indication information to another ECU such as the ECU 1.

If the detection result of the ECU 1 in S411 is abnormal, the ECU 1 may ignore the exception indication information after receiving the exception indication information sent by the ECU 2. If the detection result of the ECU 1 in S411 is normal, the ECU 1 may perform S424 and subsequent steps after receiving the exception indication information.

For example, after receiving the exception indication information, the ECU 1 determines to perform updating in S424, and may not perform S431, that is, the ECU 1 may no longer send an update indication to the ECU 2. In other words, after S424, S433 may be performed to perform identity authentication between the ECU 1 and the ECU 2. When the identity authentication succeeds, S434 is performed. The ECU 1 sends the APP file 1 to the ECU 2.

Similarly, similar to the update of the ECU 2, the ECU 1 may further determine whether the ECU 1 needs to be updated. In some embodiments, in S423, the ECU 1 may further determine, based on the version information included in the version response information, whether the APP file 1 in the ECU 1 needs to be updated. For example, when the version of the APP file 1 in the ECU 1 is lower than the version of the APP file 2 indicated by the version information included in the version response information, the ECU 1 determines that the APP file 1 in the ECU 1 needs to be updated. When the ECU 1 determines that the APP file 1 in the ECU 1 needs to be updated, the ECU 1 may send APP file 1 request update information to the ECU 2, so as to request the ECU 2 to send the APP file 2 in the ECU 2 to the ECU 1. Then, the ECU 2 may perform steps performed by the ECU 1 in S423 to S434 to update the APP file 1 in the ECU 1.

In S411 to S434, the ECU checks integrity of an APP file of the ECU, and compares versions of APP files between ECUs, so as to update an APP file in an ECU whose APP file integrity detection result is abnormal or on an ECU whose APP file version is lower, and perform troubleshooting and upgrade on the APP file in each ECU through internal processing of the vehicle. Therefore, according to the ECU update method provided in this embodiment of this application, it is not required to go to a professional maintenance center or hire a professional to provide door-to-door services, the terminal does not need to be connected to a network, and an APP file in an ECU can be updated. This reduces a requirement on an external environment.

In an existing OTA upgrade technology, an APP file is stored in an OEM cloud server. To download the file to the ECU, wireless transmission, T-Box forwarding, and gateway forwarding are required. According to the ECU update method provided in this embodiment of this application, an APP file is transmitted between ECUs in the terminal, the APP file may be transmitted between ECUs in a same domain through a communication bus, the APP file may be transmitted between ECUs in different domains through transmission of the communication bus and forwarding of the gateway, and wireless transmission and T-BOX forwarding are not required. This reduces a transmission delay and improves update efficiency.

In addition, regardless of whether a local upgrade or an OTA technology is used, an APP file in an updated ECU is newly downloaded from outside the vehicle, and may be different from a version of an APP file in another ECU of a same type in the terminal, and an incompatibility problem may exist. According to the ECU update method provided in this embodiment of this application, an APP file of a newest version stored in an ECU of ECUs of a same type may be used to update an APP file in another ECU. This avoids a case in which versions of APP files in ECUs of a same type are different, and resolves an incompatibility problem.

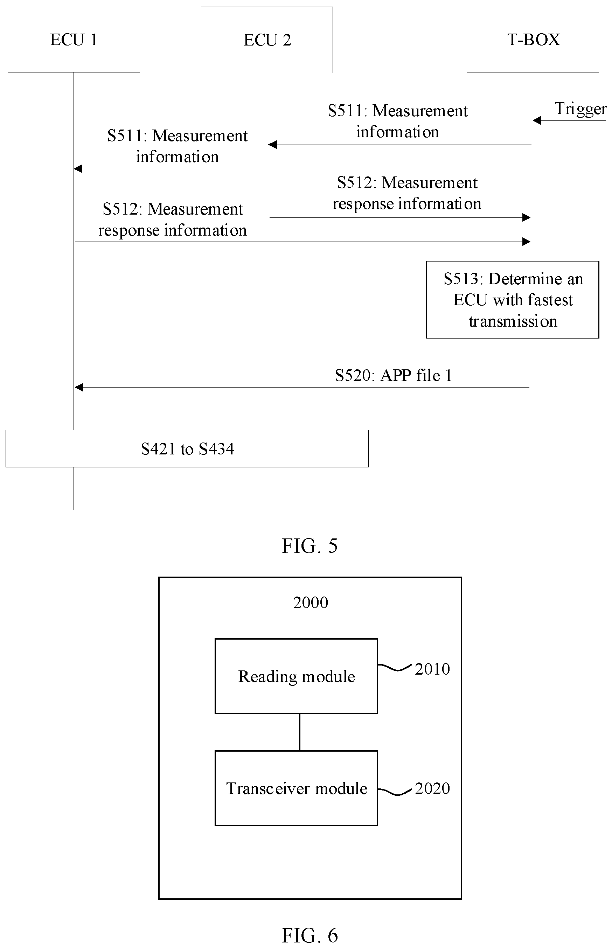

FIG. 5 is a schematic flowchart of an ECU program upgrade method according to an embodiment of this application.

By using the ECU update method shown in FIG. 4, when software upgrade needs to be performed on a plurality of ECUs of a same type in a terminal, a cloud server may send a new APP file to some ECUs of the plurality of ECUs of the same type. Then, the plurality of ECUs of the same type perform the ECU update method shown in FIG. 4, so as to complete upgrade of each ECU. In other words, when the ECU of the terminal needs to be updated, the APP file only needs to be downloaded to some ECUs in an OTA manner, for example, an ECU 1 shown in FIG. 5, and the update file does not need to be downloaded to each ECU. This reduces a network transmission resource. In addition, the ECU 1 may perform updating by using the APP file, and the ECU 1 may further forward an updated APP file to another ECU, so that the another ECU performs updating, for example, an ECU 2 shown in FIG. 5, so that the ECU 2 may also perform updating based on the APP file.

It can be learned that according to the update method provided in this embodiment of this application, for the plurality of ECUs of the terminal, the APP file does not need to be obtained from an external network (networking) in an OTA manner each time an update is performed. After the APP file is obtained from the external network periodically or aperiodically, the APP file is stored locally in an ECU. When the ECU needs to be updated or another ECU needs to be updated, the ECU performs updating or forwards the APP file to the another ECU for updating. This greatly improves update efficiency, and some ECUs can be updated without being connected to a network. This reduces dependency of ECU update on a network.

Specifically, this part of ECUs may be first upgraded by using the ECU program upgrade method shown in FIG. 5. For example, the ECU is used for a vehicle.

A terminal includes a T-BOX and a plurality of ECUs of a same type. The plurality of ECUs of the same type include an ECU 1 and an ECU 2. The T-BOX is configured to communicate with a device other than the terminal.

When the T-BOX is triggered by the outside, the terminal starts to perform the ECU program upgrade method shown in FIG. 5, that is, starts an APP file upgrade procedure. That the T-BOX is triggered by the outside may be that the T-BOX receives a new APP file or an APP file upgrade request sent by a cloud server or another device.

In S511, the T-BOX sends measurement information to the plurality of ECUs of the same type.

In S512, each of the plurality of ECUs of the same type sends measurement response information to the T-BOX.

In S513, the T-BOX determines an ECU with fastest transmission in the plurality of ECUs of the same type.

The T-BOX determines, based on a difference between sending time at which the measurement information is sent to each ECU and receiving time at which the measurement response information sent by each ECU is received, a time interval corresponding to each ECU. An ECU corresponding to a minimum time interval is an ECU with minimum transmission time, or may be understood as some ECUs with fastest transmission.

Some ECUs with the fastest transmission may include, for example, the ECU 1. The ECU 1 may be a primary ECU.

Before S520 is performed, the ECU, the T-BOX, or the another vehicle-mounted electronic device may determine whether an update condition is met. The update condition may include a maximum vehicle speed, a preset voltage range of an ECU operating voltage, and the like.

If the update condition is determined before S513 is performed, whether the operating voltage of each ECU meets the preset voltage range may be further determined before S513 is performed. In S513, the T-BOX may determine an ECU with fastest transmission from a plurality of ECUs whose operating voltages meet the preset voltage range.

Alternatively, in S511, the T-BOX may send the measurement information to the plurality of ECUs whose operating voltages meet the preset voltage range.

In S520, the T-BOX sends a new APP file, that is, an APP file 1, to the one or more ECUs with fastest transmission.

An example in which the ECU 1 is the ECU with the fastest transmission and the T-BOX sends the APP file 1 to the ECU 1 is used for description. When S513 ends, the ECU 1 may run BootLoader or an APP file.

Before S520 is performed, the T-BOX may send an upgrade request to the ECU 1.

If the ECU 1 is running an original APP file when S513 ends, after receiving the upgrade request, the ECU 1 may stop running the original APP file, and run the BootLoader.

If the ECU 1 runs the BootLoader when S513 ends, the ECU 1 keeps the BootLoader running.

Therefore, when S520 is performed, a program run by the ECU 1 is the BootLoader, to reduce a possibility that an error occurs when the ECU 1 receives and stores the APP file 1.

After S520, the T-BOX may further send a reset request to the ECU 1. The ECU 1 may read and run the APP file 1 after receiving the reset request.

After S520, the plurality of ECUs of the same type may perform S421 to S434 shown in FIG. 4, so as to perform program upgrade on each ECU in the terminal.

In some embodiments, after S520, one or more steps in S421 to S431 may be omitted.

For example, in S511 to S520, the T-BOX upgrades only one ECU, that is, the ECU 1, in the plurality of ECUs of the same type. After S520, S421 to S423 may be omitted, and the ECU 1 does not need to request and obtain a version of an APP file in another ECU. This reduces communication between ECUs and reduces a waste of a resource.

Compared with a manner in which a new APP file is downloaded from a cloud for each ECU for upgrade, according to the ECU program upgrade method in this embodiment of this application, the plurality of ECUs of the same type upgrade APPs, and some ECUs obtain new APP files from other ECUs. This reduces a quantity of times of downloading a new APP file from a cloud server, reduces a wireless transmission resource, and reduces wireless transmission time consumed for repeatedly downloading a same APP file from the cloud server.

The foregoing describes an interaction system and method embodiments in embodiments of this application with reference to FIG. 1 to FIG. 5. The following describes apparatus embodiments in embodiments of this application with reference to FIG. 6 to FIG. 8. It should be understood that descriptions of embodiments correspond to each other. Therefore, for a part that is not described in detail, refer to descriptions of the foregoing interaction system and method embodiments.

FIG. 6 is a schematic diagram of a structure of an ECU according to an embodiment of this application.

An ECU 2000 includes a reading module 2010 and a transceiver module 2020.

The reading module 2010 is configured to read a locally stored first file.

The transceiver module 2020 is configured to send the first file to a second ECU, so that the second ECU is updated, and a first ECU and the second ECU are located in a same terminal.

Optionally, when an update requirement is met, the first ECU sends the first file to the second ECU, where the update requirement includes that a version of the first file is higher than a version of a second file, and the second file is a file used when the second ECU is not updated.

Optionally, the transceiver module 2020 is further configured to receive version information sent by the second ECU, where the version information indicates the version of the second file.

The ECU 2000 further includes a processing module, and the processing module is configured to determine, based on the version information, whether the update requirement is met.

Optionally, the transceiver module 2020 is further configured to receive the first file sent by a telematics box T-BOX.

Optionally, the transceiver module 2020 is configured to: if the second file is abnormal, send, by using the first ECU, the first file to the second ECU, where the second file is the file used when the second ECU is not updated.

Optionally, the transceiver module 2020 is further configured to send version query information to the second ECU.

The ECU 2000 may further include a processing module, configured to: when the ECU 2000 does not receive version information from the second ECU in preset duration after the version query information is sent, determine that the second file is abnormal, where the version information indicates the version of the second file.

Optionally, the ECU 2000 may further include a processing module, and the processing module is configured to detect whether the first file is normal.

The transceiver module 2020 is further configured to: send, by using the first ECU, the first file to the second ECU when the first file is normal.

Optionally, the processing module is configured to perform integrity check on the first file.

Optionally, the first file is an application APP file.

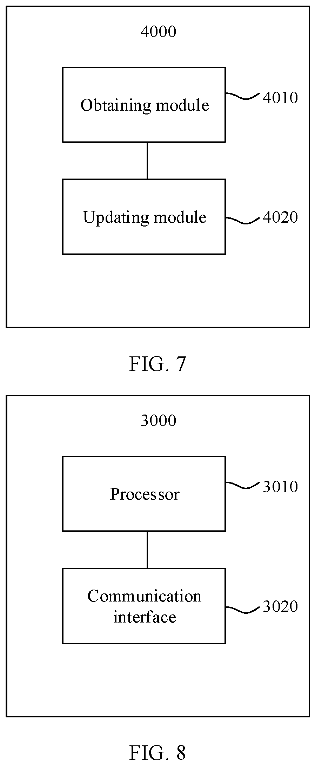

FIG. 7 is a schematic diagram of a structure of an ECU according to an embodiment of this application.

The ECU 4000 includes an obtaining module 4010 and an updating module 4020.

The obtaining module 4010 is configured to obtain a first file from a first ECU, where the first file is a file locally stored in the first ECU.

The updating module 4020 is configured to perform updating based on the first file.

Optionally, the obtaining module 4010 is configured to: when an update requirement is met, obtain, by using the second ECU, the first file from the first ECU, where the update requirement includes that a version of the first file is higher than a version of a second file, and the second file is a file used when the second ECU is not updated.

Optionally, the ECU 4000 further includes a transceiver module, configured to send version information to the first ECU, where the version information indicates the version of the second file.

The obtaining module 4010 is configured to receive the first file, where the first file is sent by the first ECU when the first ECU determines, based on the version information, that the update requirement is met.

Optionally, the obtaining module 4010 is configured to: obtain the first file from the first ECU when the second file is abnormal, where the second file is the file used when the second ECU is not updated.

Optionally, the ECU 4000 further includes a processing module, configured to determine whether the second file is abnormal.

Optionally, the ECU 4000 further includes a processing module, configured to detect whether the obtained first file is normal.

Optionally, the processing module is configured to perform integrity check on the obtained second file.

Optionally, the first file is obtained by the first ECU from a telematics box TBOX.

Optionally, the first file is an application APP file.

FIG. 8 is a schematic diagram of a structure of an ECU according to an embodiment of this application.

The ECU 3000 includes a processor 3010 and a communication interface 3020.

The communication interface 3020 is used by the ECU 3000 to exchange information with another apparatus. When program instructions are executed by the processor 3010, the ECU 3000 is enabled to perform the ECU update method described above.

Specifically, the ECU 3000 may be configured to perform steps performed by any one of the first ECU and the second ECU in FIG. 3, and the ECU 1 and the ECU 2 in FIG. 4 and FIG. 5.

An embodiment of this application further provides a terminal, including an ECU 2000 and an ECU 4000.

According to an embodiment of this application, a computer program storage medium is further provided. The computer program storage medium has program instructions, and when the program instructions are executed, the foregoing method is performed.

According to an embodiment of this application, a chip system is further provided. The chip system includes at least one processor, and when program instructions are executed by the at least one processor, the foregoing method is performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between associated objects. At least one of the following items and a similar expression thereof refer to any combination of these items, including a single item or any combination of plural items. For example, at least one item of a, b, and c may indicate: a, b, c, a and b, a and c, b and c, or a, b, and c, where a, b, and c may be singular or plural. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electronic control unit ECU update method, wherein the method comprises:
obtaining, by a second ECU, a first file from a first ECU, wherein the first file is a file locally stored in the first ECU; and
performing, by the second ECU, updating based on the first file, wherein
the first ECU and the second ECU are located in a same terminal.

2. The method according to claim 1, wherein the obtaining, by a second ECU, a first file from a first ECU comprises:
obtaining, by the second ECU, the first file from the first ECU when an update requirement is met, wherein the update requirement comprises that a version of the first file is higher than a version of a second file, and the second file is a file used when the second ECU is not updated.

3. The method according to claim 2, wherein the method further comprises:
sending, by the second ECU, version information to the first ECU, wherein the version information indicates the version of the second file; and
the obtaining, by a second ECU, a first file from a first ECU comprises: receiving the first file, wherein the first file is sent by the first ECU when the first ECU determines, based on the version information, that the update requirement is met.

4. The method according to claim 1, wherein
the obtaining, by a second ECU, a first file from a first ECU comprises: obtaining, by the second ECU, the first file from the first ECU when a second file is abnormal, wherein the second file is a file used when the second ECU is not updated.

5. The method according to any one of claims 2 to 4, wherein before the performing, by the second ECU, updating based on the first file, the method further comprises: detecting, by the second ECU, whether the second file is normal.

6. The method according to claim 5, wherein the detecting, by the second ECU, whether the second file is normal comprises: performing, by the second ECU, integrity check on the second file.

7. The method according to claims 1 to 6, wherein the first file is obtained by the first ECU from a telematics box TBOX of the terminal.

8. The method according to any one of claims 1 to 7, wherein the first file is an application APP file.

9. An electronic control unit ECU update method, wherein the method comprises:
reading, by a first ECU, a first file locally stored in the first ECU; and
sending, by the first ECU, the first file to a second ECU, so that the second ECU is updated, wherein the first ECU and the second ECU are located in a same terminal.

10. The method according to claim 9, wherein
the sending, by the first ECU, the first file to a second ECU comprises: sending, by the first ECU, the first file to the second ECU when an update requirement is met, wherein the update requirement comprises that a version of the first file is higher than a version of a second file, and the second file is a file used when the second ECU is not updated.

11. The method according to claim 10, wherein the method further comprises:
receiving, by the first ECU, version information sent by the second ECU, wherein the version information indicates the version of the second file; and
determining, by the first ECU based on the version information, whether the update requirement is met.

12. The method according to any one of claims 9 to 11, wherein the method further comprises:
receiving, by the first ECU, the first file sent by a telematics box T-BOX.

13. The method according to any one of claims 9 to 12, wherein the sending, by the first ECU, the first file to a second ECU comprises:
sending, by the first ECU, the first file to the second ECU when the second file is abnormal, wherein the second file is the file used when the second ECU is not updated.

14. The method according to claim 13, wherein
the method further comprises: sending, by the first ECU, version query information to the second ECU; and
the sending, by the first ECU, the first file to a second ECU comprises: if the first ECU does not receive the version information from the second ECU in preset duration after the version query information is sent, determining, by the first ECU, that the second file is abnormal, wherein the version information indicates the version of the second file.

15. The method according to any one of claims 9 to 14, wherein the method further comprises: detecting, by the first ECU, whether the first file is normal; and
the sending, by the first ECU, the first file to a second ECU comprises: sending, by the first ECU, the first file to the second ECU when the first file is normal.

16. The method according to claim 15, wherein the detecting, by the first ECU, whether the first file is normal comprises: performing, by the first ECU, integrity check on the first file.

17. The method according to any one of claims 9 to 16, wherein the first file is an application APP file.

18. An electronic control unit ECU, comprising a communication interface and a processor, wherein the communication interface is used by the ECU to exchange information with another apparatus, and when program instructions are executed by the processor, the ECU is enabled to perform the ECU update method according to any one of claims 1 to 17.

19. A computer program storage medium, wherein the computer program storage medium comprises program instructions, and when the program instructions are executed, the method according to any one of claims 1 to 17 is performed.

20. A chip, wherein the chip comprises at least one processor, and when program instructions are executed by the at least one processor, the method according to any one of claims 1 to 17 is performed.

21. A terminal, comprising a first electronic control unit ECU and a second ECU, wherein the first ECU is configured to perform the method according to any one of claims 1 to 8, and the second ECU is configured to perform the method according to any one of claims 9 to 17.

22. The terminal according to claim 21, wherein the terminal is a vehicle.
